# EUROPÄISCHE PATENTSCHRIFT

(11) **EP 4 150 316 B1**
(45) Veröffentlichungstag und Bekanntmachung des Hinweises auf die Patenterteilung: **11.12.2024**
(21) Anmeldenummer: 21726034.8
(22) Anmeldetag: 10.05.2021
(51) Int. Cl.: G01N 15/0227, G01N 15/1429, G01N 15/1433, G01N 15/14, G06T 7/62, G06F 18/2413, G06N 3/045, G06V 10/26, G06V 10/82, G06V 20/52, G06V 20/64

(54) **VERFAHREN ZUM ABSCHNITTSWEISEN BESTIMMEN DES VOLUMENS EINES AUF EIN FÖRDERBAND AUFGEGEBENEN SCHÜTTGUTES**
METHOD FOR DETERMINING, IN PARTS, THE VOLUME OF A BULK MATERIAL FED ONTO A CONVEYOR BELT
PROCÉDÉ DE DÉTERMINATION, PAR PARTS, DU VOLUME D'UN MATÉRIAU EN VRAC AMENÉ SUR UNE BANDE TRANSPORTEUSE

(30) Priorität: 13.05.2020 AT 504222020
(43) Veröffentlichungstag der Anmeldung: 22.03.2023
(73) Patentinhaber: Rubble Master HMH GmbH, 4030 Linz (AT)
(72) Erfinder: HINTERDORFER, Christian, 4293 Gutau (AT); HINTERREITER, Christian, 4593 Obergrünburg (AT)
(74) Vertreter: Hübscher & Partner Patentanwälte GmbH
(86) Internationale Anmeldenummer: PCT/AT2021/060162
(87) Internationale Veröffentlichungsnummer: WO 2021/226646

(56) Entgegenhaltungen:
- CN-A- 105 478 373
- US-A1- 2016 370 274
- US-A1- 2017 058 620
- PIERRE SERMANET ET AL: "OverFeat: Integrated Recognition, Localization and Detection using Convolutional Networks", 21 December 2013 (2013-12-21), XP055545560, Retrieved from the Internet <URL:https://arxiv.org/abs/1312.6229> [retrieved on 20190122]
- KAREN SIMONYAN ET AL: "Very Deep Convolutional Networks for Large-Scale Image Recognition", 4 September 2014 (2014-09-04), XP055270857, Retrieved from the Internet <URL:http://arxiv.org/pdf/1409.1556v6.pdf> [retrieved on 20160506]

## Beschreibung

### Technisches Gebiet

Die Erfindung bezieht sich auf ein Verfahren zum abschnittsweisen Bestimmen des Volumens eines auf ein Förderband aufgegebenen Schüttgutes wobei vom Schüttgut abschnittsweise in einem Erfassungsbereich von einem Tiefensensor ein Tiefenbild erfasst wird.

### Stand der Technik

Es ist bekannt (WO2006027802A1) mittels Dualkamera und Lasertriangulation Schüttgut auf einem Förderband zu vermessen und dessen Eigenschaften, wie das Volumen oder die Geometrie des Schüttgutes aus den Messdaten zu errechnen und zu klassifizieren.

Nachteilig am Stand der Technik ist allerdings, dass diese photogrammetrischen Verfahren sehr zeitaufwändig in der Volumenbestimmung des Schüttgutes sind, da für jedes erfasste Korn im Schüttgut eine Reihe komplizierter Erfassungs- und Vermessungsalgorithmen durchgeführt werden muss, die aufgrund der hohen Kornanzahl und dem individuellen Rechenaufwand pro Korn in Summe hohe Rechenzeiten erfordern. Darüber hinaus dürfen sich bei diesem Verfahren die Körner auf dem Förderband nicht überlappen, was allerdings im realistischen Förderbetrieb unvermeidbar ist. Aufgrund dieser Einschränkungen können im Stand der Technik nur ca. 100-200 Körner pro Stunde vermessen werden. Da übliche Förderbänder bei weitem mehr Körner transportieren als Verfahren aus dem Stand der Technik im selben Zeitraum vermessen können, resultiert die Anwendung bekannter Messverfahren in einer signifikanten Verlangsamung der Fördergeschwindigkeit und damit in Produktivitätseinbußen. Selbst bei aufwändigen Systemen, die einen großen Platzbedarf aufweisen, können so nur

Bandgeschwindigkeiten von unter 2 m/s erreicht werden. US 2017/058620 A1 offenbart ebenfalls ein Verfahren zum abschnittsweisen Bestimmen des Volumens eines auf ein Förderband aufgegebenen Schüttgutes.

### Darstellung der Erfindung

Der Erfindung liegt somit die Aufgabe zugrunde, Schüttgut auch bei Überlappungen zuverlässig bei Fördergeschwindigkeiten von mehr als 2 m/s zu klassifizieren, ohne dass hierfür konstruktiv aufwendige Maßnahmen getroffen werden müssen.

Die Erfindung löst die gestellte Aufgabe dadurch, dass das erfasste zweidimensionale Tiefenbild einem vorab trainierten, faltenden neuronalen Netzwerk zugeführt wird, dass wenigstens drei hintereinanderliegende Faltungsebenen, sogenannte convolution layer, und einen nachgelagerten Volumenklassifizierer, beispielsweise ein sogenannter fully connected layer, aufweist, dessen Ausgangswert als das im Erfassungsbereich vorhandene Schüttgutvolumen ausgegeben wird. Der Erfindung liegt also die Überlegung zugrunde, dass bei der Verwendung von zweidimensionalen Tiefenbildern die zur Volumenbestimmung notwendige Information aus den Tiefeninformationen extrahiert werden kann, nachdem ein hierfür eingesetztes neuronales Netzwerk mit Trainingstiefenbildern mit bekanntem Schüttgutvolumen trainiert wurde. Die Faltungsebenen reduzieren dabei die Eingangstiefenbilder zu einer Reihe von Einzelmerkmalen, die wiederum vom nachgelagerten Volumenklassifizierer bewertet werden, sodass im Ergebnis das Gesamtvolumen des im Eingangstiefenbild abgebildeten Materials ermittelt werden kann. Die Anzahl der vorgesehenen Faltungsebenen, die jeweils von einer Pooling-Ebene zur Informationsreduktion gefolgt sein können, kann je nach verfügbarer Rechenleistung bei wenigstens drei, vorzugsweise bei fünf, liegen. Zwischen den Faltungsebenen und dem nachgelagerten Volumenklassifizierer kann in bekannter Weise eine Ebene zur Dimensionsreduktion, ein sogenannter flattening layer, vorgesehen sein. Das Volumen muss daher nicht mehr für jedes einzelne Korn berechnet werden. Da im Tiefenbild je Bildpunkt der Abstand des abgebildeten Objekts zum Tiefensensor mit nur einem Wert abgebildet wird, kann im Gegensatz zur Verarbeitung von Farbbildern die zu verarbeitende Datenmenge reduziert, das Messverfahren beschleunigt und der für das neuronale Netzwerk erforderliche Speicherbedarf verringert werden. Dadurch kann das neuronale Netzwerk auf günstigen KI-Parallelrecheneinheiten mit GPU-Unterstützung implementiert und das Verfahren unabhängig von der Farbe des Schüttgutes eingesetzt werden. Auch kann das Schüttgutvolumen durch die Beschleunigung des Messverfahrens selbst bei Förderbandgeschwindigkeiten von 3m/s, bevorzugter Weise 4m/s, bestimmt werden. Diese Reduktion der Datenmenge im Bild senkt zusätzlich die Fehleranfälligkeit für die korrekte Bestimmung des Schüttgutvolumens. Die Verwendung von Tiefenbildern hat im Gegensatz zu Farb- oder Graustufenbildern den zusätzlichen Vorteil, dass das Messverfahren weitgehend unabhängig von sich ändernden Belichtungsbedingungen ist. Als neuronales Netzwerk kann beispielsweise ein üblicherweise nur für Farbbilder verwendetes vgg16 Netzwerk (Simonyan / Zisserman, Very Deep Convolutional Networks for Large-Scale Image Recognition, 2015) zum Einsatz kommen, das lediglich auf einen Kanal, nämlich für die Werte der Tiefenbildpunkte, reduziert ist. Das Tiefenbild kann beispielsweise mit einer 3D-Kamera erfasst werden, da diese aufgrund des geringeren Platzbedarfes auch bei geringem Raumangebot oberhalb eines Förderbandes angeordnet werden kann. Um Schwankungen bei der Erfassung des Volumens auszugleichen und fehlerhafte Ausgabewerte des neuronalen Netzwerkes zu kompensieren, können darüber hinaus mehrere aufeinanderfolgende Ausgangswerte gemittelt und der Mittelwert als das im Erfassungsbereich vorhandene Schüttgutvolumen ausgegeben werden.

Das Trainieren des neuronalen Netzwerks wird erschwert und die Messgenauigkeit nimmt im laufenden Betrieb ab, wenn schüttgutfremde Elemente im Erfassungsbereich des Tiefensensors liegen. Dazu zählen beispielsweise vibrierende Bauteile des Förderbandes selbst, oder aber andere Maschinenelemente. Zur Vermeidung der daraus entstehenden Störungen wird vorgeschlagen, dass aus dem Tiefenbild und/oder dem Trainingstiefenbild die Werte jener Bildpunkte entfernt werden, deren Tiefe einem vorab erfassten Abstand zwischen Tiefensensor und einem Hintergrund für diesen Bildpunkt entspricht oder diesen Abstand überschreitet. Dadurch können störende Bildinformationen, hervorgerufen beispielsweise durch Vibrationen des Förderbandes, entfernt und sowohl die Tiefenbilder als auch die Trainingsbilder auf die für die Vermessung relevanten Informationen beschränkt werden.

Das Schüttgutvolumen reicht allerdings für sich alleine nicht aus, um Prozessparameter, wie sie insbesondere bei der Verwendung in Brechern erforderlich sind, zu ermitteln. Daher wird vorgeschlagen, dass den Faltungsebenen je Klasse einer Korngrößenverteilung ein Mengenklassifizierer nachgelagert ist und die Ausgangswerte dieser Mengenklassifizierer als Korngrößenverteilung ausgegeben werden. Diese Korngrößenverteilung ist ein Histogramm, das entweder mit absoluten Mengenwerten oder aber mit auf das Schüttgutvolumen bezogenen relativen Mengenwerten gebildet werden kann und liefert damit wichtige Rückschlüsse, beispielsweise auf den Brechspalt, etwaige Störungen oder andere Prozessparameter eines Brechers. Somit kann durch die erfindungsgemäßen Maßnahmen die herkömmlicherweise nur sehr aufwändig bestimmbare Siebkurve von Brechern mit hohen Geschwindigkeiten automatisiert erfasst werden, da keine Parameter für einzelne Körner erfasst und daraus relevante Größen berechnet werden müssen. Die Bestimmung der Korngrößenverteilung direkt aus dem Tiefenbild verringert dadurch auch die Fehleranfälligkeit beim Bestimmen der Korngrößenverteilung.

Um das Schüttgut anhand seiner mechanischen Eigenschaften besser einteilen zu können, wird vorgeschlagen, dass den Faltungsebenen ein Kubizitätsklassifizierer nachgelagert ist, dessen Ausgangswert als Kubizität ausgegeben wird. Als Kubizität wird das Achsenverhältnis einzelner Körner des Schüttguts angesehen, das beispielsweise der Quotient aus Länge und Dicke des Korns ist.

Das Training des neuronalen Netzwerks erfordert große Mengen an Trainingstiefenbildern, die das zu erfassende Schüttgut möglichst exakt repräsentieren. Der Arbeitsaufwand um die notwendige Menge an Schüttgut zu vermessen ist allerdings extrem hoch. Um dem neuronalen Netz dennoch ausreichende Trainingstiefenbilder zur Verfügung zu stellen, um das Schüttgutvolumen zu bestimmen, wird vorgeschlagen, dass zunächst Beispieltiefenbilder je eines Beispielkornes mit bekanntem Volumen erfasst und gemeinsam mit dem Volumen abgespeichert werden, wonach mehrere Beispieltiefenbilder zufällig zu einem Trainingstiefenbild zusammengesetzt werden, dem als Schüttgutvolumen die Summe der Volumina der zusammengesetzten Beispieltiefenbilder zugeordnet wird, wonach das Trainingstiefenbild eingangsseitig und das zugeordnete Schüttgutvolumen ausgangsseitig dem neuronalen Netzwerk zugeführt und die Gewichte der einzelnen Netzwerkknoten in einem Lernschritt angepasst werden. Der Trainingsmethode liegt also die Überlegung zugrunde, dass durch die Kombination von Beispieltiefenbildern vermessener Beispielkörner mannigfaltige Kombinationen an Trainingstiefenbildern erstellt werden können. Es genügt also, Beispieltiefenbilder verhältnismäßig weniger Beispielkörner mit ihrem Volumen zu erfassen, um eine große Anzahl an Trainingstiefenbildern zu generieren mit denen das neuronale Netzwerk trainiert werden kann. Zum Training des neuronalen Netzwerks werden in den einzelnen Trainingsschritten in bekannter Weise die Gewichte zwischen den einzelnen Netzwerkknoten so angepasst, dass der tatsächliche Ausgabewert dem vorgegebenen Ausgabewert am Ende des neuronalen Netzwerks ehestmöglich entspricht. Dabei können an den Netzwerkknoten unterschiedliche Aktivierungsfunktionen vorgegeben werden, die dafür maßgeblich sind, ob ein am Netzwerkknoten anliegender Summenwert an die nächste Ebene des neuronalen Netzwerks weitergegeben wird. Analog zum Volumen können den Beispieltiefenbildern auch andere Parameter, wie beispielsweise die Kubizität, Fremdstoff- bzw. Störstoffanteil oder die Korngröße zugewiesen werden. Auch kann für jedes Trainingstiefenbild die sich aus den Körnern der Beispieltiefenbilder ergebende Korngrößenverteilung zugewiesen werden. Zur Tiefenbildverarbeitung wird auch hier vorgeschlagen, dass aus dem Tiefenbild die Werte jener Bildpunkte entfernt werden, deren Tiefe einem vorab erfassten Abstand zwischen Tiefensensor und Förderband für diesen Bildpunkt entspricht oder diesen Abstand überschreitet. Dadurch weisen die Trainingstiefenbilder und die Tiefenbilder des gemessenen Schüttguts nur die für die Vermessung relevanten Informationen auf, wodurch ein stabileres Trainingsverhalten erreicht und die Erkennungsrate bei der Anwendung erhöht wird. Über die Auswahl der Beispiel- bzw. der aus ihnen zusammengesetzten Trainingstiefenbilder kann das neuronale Netz auf beliebige Arten von Schüttgut trainiert werden.

Um das Trainingsverhalten und die Erkennungsrate weiter zu verbessern, wird vorgeschlagen, dass die Beispieltiefenbilder mit zufälliger Ausrichtung zu einem Trainingstiefenbild zusammengesetzt werden. Dadurch wird bei gegebener Anzahl an Körnern pro Beispieltiefenbild die Anzahl an möglichen Anordnungen der Körner deutlich erhöht ohne dass mehr Beispieltiefenbilder generiert werden müssen und eine Überanpassung des neuronalen Netzwerks wird vermieden.

Eine Vereinzelung der Körner des Schüttguts kann entfallen und größere Schüttgutvolumen können bei gleichbleibender Fördergeschwindigkeit des Förderbandes bestimmt werden, wenn die Beispieltiefenbilder mit teilweisen Überlappungen zu einem Trainingstiefenbild zusammengesetzt werden, wobei der Tiefenwert des Trainingstiefenbilds im Überlappungsbereich der geringsten Tiefe beider Beispieltiefenbilder entspricht. Um realistische Schüttgutverteilungen zu erfassen, müssen die Fälle berücksichtigt werden, in denen zwei Körner aufeinander zu liegen kommen. Das neuronale Netzwerk kann dahingehend trainiert werden, dass es solche Überlappungen erkennt, und das Volumen der Beispielkörner trotzdem ermitteln kann.

### Darstellung der Erfindung

In der Zeichnung ist der Erfindungsgegenstand beispielsweise dargestellt. Es zeigen
- Fig. 1: eine schematische Seitenansicht eines mit Schüttgut beladenen Förderbandes, eines Tiefensensors und einer Recheneinheit
- Fig. 2: eine schematische Darstellung des faltenden neuronalen Netzwerkes und
- Fig. 3: ein aus vier Beispieltiefenbildern zusammengesetztes Trainingstiefenbild.

### Wege zur Ausführung der Erfindung

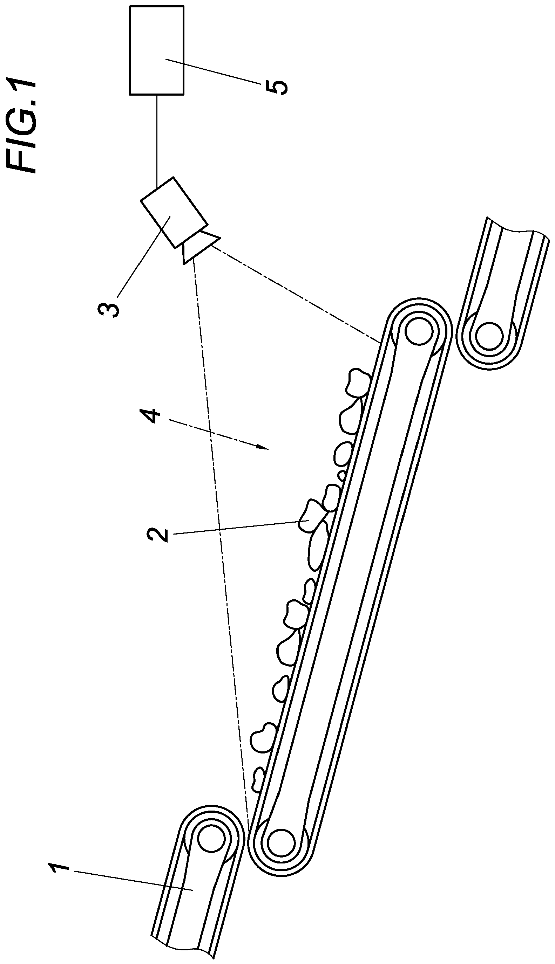

Fig. 1 zeigt eine Vorrichtung zur Durchführung des erfindungsgemäßen Verfahrens, welche ein Förderband 1 umfasst auf dem Schüttgut 2 aufgegeben wurde. Ein Tiefensensor 3 erstellt Tiefenbilder 6 des Schüttguts 2 in einem Erfassungsbereich 4 des Tiefensensors 3 und sendet diese an eine Recheneinheit 5.

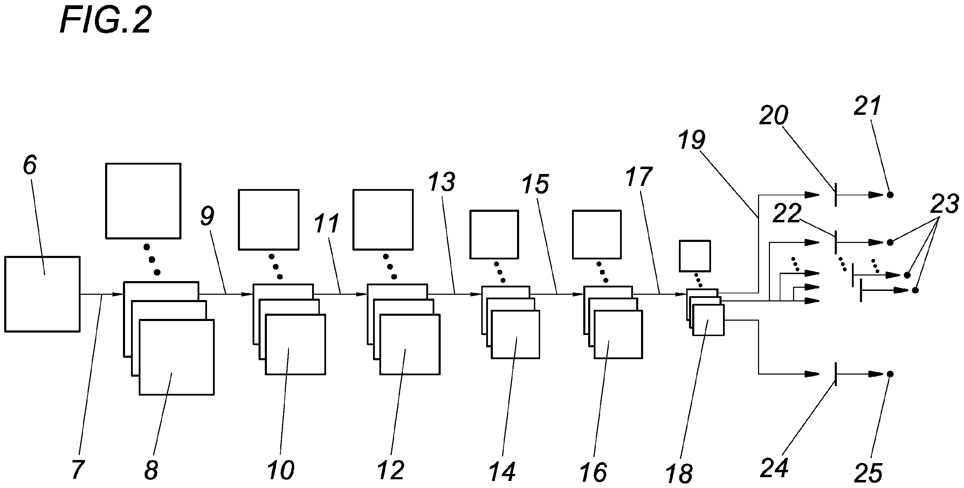

In der Recheneinheit 5 werden die Tiefenbilder einem neuronalen Netzwerk zugeführt und von diesem verarbeitet. Die Bestimmung des Schüttgutvolumens kann dabei beispielhaft die folgenden Schritte enthalten und wird für ein Tiefenbild 6 in der Fig. 2 gezeigt: In einem ersten Arbeitsschritt 7 wird das Tiefenbild 6 der ersten Faltungsebene zugeführt. Dabei werden in der Faltungsebene aus dem Tiefenbild 6 durch pixelweise Faltung des Tiefenbilds 6 mit einem Faltungskernel mehrere Ausgaben 8, so genannte Feature Maps, erzeugt, die unterschiedliche Aspekte abbilden. Diese Ausgaben 8 weisen dieselben Dimensionen und dieselbe Pixelanzahl wie das Tiefenbild 6 auf. Im nächsten Arbeitsschritt 9 wird die Pixelanzahl mittels einer Pooling-Ebene verringert. Dabei wird für jede Ausgabe 8 aus einem Quadrat aus beispielsweise 4 Pixeln nur dasjenige mit dem höchsten Wert ausgewählt und in ein entsprechendes Pixel der Ausgabe 10 übernommen, die verglichen zur Ausgabe 8 nun komprimiert ist. Da sich diese Quadrate überlappen, wird dabei die Anzahl der Pixel um den Faktor 2 reduziert. Die Arbeitsschritte 7 und 9 werden nun in weiteren Ebenen wiederholt, allerdings wird im Arbeitsschritt 11 die Faltung auf jede Ausgabe 10 angewandt, wodurch sich die Anzahl der erzeugten Ausgaben 12 weiter erhöht. Die Anwendung der Pooling-Ebene auf die Ausgaben 12 in Schritt 13 senkt die Pixelzahl weiter und erzeugt die Ausgaben 14. Schritt 15 erfolgt analog zu Schritt 11 und erzeugt die Ausgaben 16. Schritt 17 erfolgt analog zu Schritt 13, senkt die Pixelzahl und liefert Ausgabe 18. Die Anwendungsschritte der Faltungs- und Pooling-Ebenen können je nach den zu ermittelnden Aspekten im Tiefenbild 6 weiter wiederholt werden. Im Schritt 19 werden die Pixel der Ausgaben 18 durch Dimensionsreduktion aneinandergereiht, und deren Information an einen Klassifizierer, beispielsweise an einen Volumenklassifizierer 20 übermittelt, dessen Ausgangswert 21 als das im Erfassungsbereich vorhandene Schüttgutvolumen ausgegeben werden kann. Neben dem Volumenklassifizierer 20 können zusätzliche Mengenklassifizierer 22 vorgesehen sein, deren Ausgangswerte 23 die relativen oder absoluten Mengen des Histogramms einer Korngrößenverteilung bilden. Darüber hinaus kann auch ein Kubizitätsklassifizierer 24 vorgesehen sein, dessen Ausgangswert 25 der durchschnittlichen Kubizität des im Erfassungsbereich vorhandenen Schüttguts 2 entspricht.

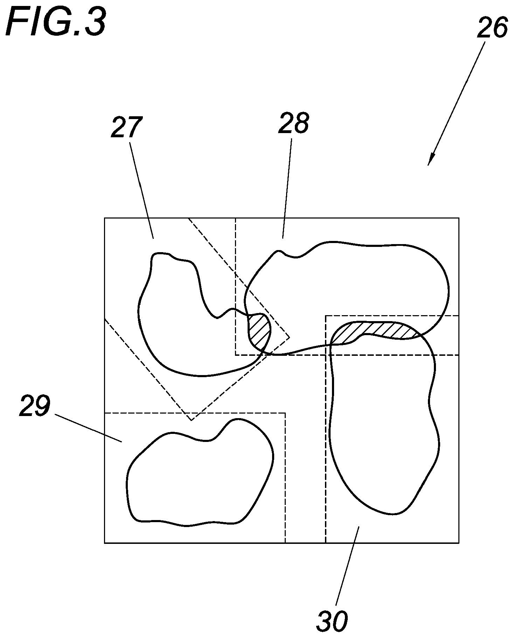

Den Aufbau eines Trainingstiefenbildes 26 kann man der Fig. 3 entnehmen. Hier werden vier Bespieltiefenbilder 27, 28, 29, 30 unterschiedlicher vorab vermessener Körner zu einem Trainingstiefenbild 25 zusammengesetzt. Die Beispieltiefenbilder 27, 28, 29, 30 können dabei in beliebiger Positionierung und Ausrichtung zu einem Trainingstiefenbild 26 zusammengesetzt sein und sich teilweise überlappen. Die Überlappungen sind im Trainingstiefenbild 26 schraffiert dargestellt.

## Patentansprüche

1. Verfahren zum abschnittsweisen Bestimmen des Volumens eines auf ein Förderband (1) aufgegebenen Schüttgutes (2), wobei vom Schüttgut (2) abschnittsweise in einem Erfassungsbereich (4) von einem Tiefensensor (3) ein Tiefenbild (6) erfasst wird, wobei das erfasste zweidimensionale Tiefenbild (6) einem vorab trainierten, faltendem neuronalen Netzwerk zugeführt wird,
**dadurch gekennzeichnet, dass**
das vorab trainierte, faltende neuronale Netzwerk wenigstens drei hintereinanderliegende Faltungsebenen und einen nachgelagerten Volumenklassifizierer (20) aufweist, dessen Ausgangswert (21) als das im Erfassungsbereich (4) vorhandene Schüttgutvolumen ausgegeben wird.

2. Verfahren nach Anspruch 1, **dadurch gekennzeichnet, dass** aus dem Tiefenbild (6) die Werte jener Bildpunkte entfernt werden, deren Tiefe einem vorab erfassten Abstand zwischen Tiefensensor (3) und einem Hintergrund für diesen Bildpunkt entspricht oder diesen Abstand überschreitet.

3. Verfahren nach einem der Ansprüche 1 oder 2, **dadurch gekennzeichnet, dass** den Faltungsebenen je Klasse einer Korngrößenverteilung ein Mengenklassifizierer (22) nachgelagert ist und dass die Ausgangswerte dieser Mengenklassifizierer (22) als Korngrößenverteilung ausgegeben werden.

4. Verfahren nach einem der Ansprüche 1 bis 3, **dadurch gekennzeichnet, dass** den Faltungsebenen ein Kubizitätsklassifizierer (24) nachgelagert ist, dessen Ausgangswert als Kubizität ausgegeben wird.

5. Verfahren zum Trainieren eines neuronalen Netzwerks für ein Verfahren nach einem der vorangegangenen Ansprüche, **dadurch gekennzeichnet, dass** zunächst Beispieltiefenbilder (27, 28, 29, 30) je eines Beispielkornes mit bekanntem Volumen erfasst und gemeinsam mit dem Volumen abgespeichert werden, wonach mehrere Beispieltiefenbilder (27, 28, 29, 30) zufällig zu einem Trainingstiefenbild (26) zusammengesetzt werden, dem als Schüttgutvolumen die Summe der Volumina der zusammengesetzten Beispieltiefenbilder (27, 28, 29, 30) zugeordnet wird, wonach das Trainingstiefenbild (26) eingangsseitig und das zugeordnete Schüttgutvolumen ausgangsseitig dem neuronalen Netzwerk zugeführt und die Gewichte der einzelnen Netzwerkknoten in einem Lernschritt angepasst werden.

6. Verfahren nach Anspruch 5, **dadurch gekennzeichnet, dass** die Beispieltiefenbilder (27, 28, 29, 30) mit zufälliger Ausrichtung zu einem Trainingstiefenbild (26) zusammengesetzt werden.

7. Verfahren nach Anspruch 5 oder 6, **dadurch gekennzeichnet, dass** die Beispieltiefenbilder (27, 28, 29, 30) mit teilweisen Überlappungen zu einem Trainingstiefenbild (26) zusammengesetzt werden, wobei der Tiefenwert des Trainingstiefenbilds (26) im Überlappungsbereich der geringsten Tiefe beider Beispieltiefenbilder (27, 28, 29, 30) entspricht.

## Claims

1. Method for determining section by section the volume of a bulk material (2) fed onto a conveyor belt (1), wherein a depth image (6) of the bulk material (2) is captured section by section in a capturing region (4) by means of a depth sensor (3), wherein the captured two-dimensional depth image (6) is fed to a pre-trained convolutional neural network, **characterized in that** the pre-trained convolutional neural network has at least three successive convolution layers and a downstream volume classifier (20), the output value (21) of which is output as the bulk material volume present in the capturing region (4).

2. Method according to claim 1, **characterized in that** from the depth image (6) the values of those pixels are removed whose depth corresponds to a previously detected distance between depth sensor (3) and a background for this pixel or exceeds this distance.

3. Method according to one of claims 1 or 2, **characterized in that** a quantity classifier (22) is arranged downstream of the convolution layers for each class of a particle size distribution, and **in that** the output values of these quantity classifiers (22) are output as a particle size distribution.

4. Method according to one of claims 1 to 3, **characterized in that** a cubicity classifier (24) is arranged downstream of the convolution layers, the output value of which is output as cubicity.

5. Method for training a neural network for a method according to one of the preceding claims, **characterized in that** firstly example depth images (27, 28, 29, 30) each of one example grain with a known volume are acquired and stored together with the volume, whereupon a plurality of example depth images (27, 28, 29, 30) are randomly combined to form a training depth image (26), to which the sum of the volumes of the combined example depth images (27, 28, 29, 30) is assigned as bulk material volume, whereupon the training depth image (26) is fed to the neural network on the input side and the assigned bulk material volume is fed to the neural network on the output side, and the weights of the individual network nodes are adapted in a learning step.

6. Method according to claim 5, **characterized in that** the example depth images (27, 28, 29, 30) are combined with random alignment to form a training depth image (26).

7. Method according to claim 5 or 6, **characterized in that** the example depth images (27, 28, 29, 30) are combined with partial overlaps to form a training depth image (26), wherein the depth value of the training depth image (26) in the overlap region corresponds to the lowest depth of both example depth images (27, 28, 29, 30).

## Revendications

1. Procédé pour déterminer par sections le volume d'un matériau en vrac (2) déposé sur un tapis roulant (1), une image en profondeur (6) du matériau en vrac (2) étant détectée par sections dans une zone de détection (4) par un capteur de profondeur (3), laquelle image en profondeur bidimensionnelle (6) détectée est transmise à un réseau neuronal convolutif préalablement entraîné, caractérisé en ce quele réseau neuronal convolutif préalablement entraîné comporte au moins trois couches de convolution successives et un classificateur de volume (20) situé en aval dont la valeur de sortie (21) est donnée comme volume du matériau en vrac présent dans la zone de détection (4).

2. Procédé selon la revendication 1, **caractérisé en ce que** les valeurs des pixels dont la profondeur correspond à une distance précédemment détectée entre le capteur de profondeur (3) et un arrière-plan de ce pixel ou excède cette distance sont éliminées de l'image en profondeur (6).

3. Procédé selon une des revendications 1 ou 2, **caractérisé en ce qu'**un classificateur de quantité (22) est placé en aval des couches de convolution pour chaque classe granulométrique et que les valeurs de sortie de ces classificateurs de quantité (22) sont émises comme valeur granulométrique.

4. Procédé selon une des revendications 1 à 3, **caractérisé en ce qu'**un classificateur de cubicité (24) dont la valeur de sortie est émise comme cubicité est placé en aval des couches de convolution.

5. Procédé pour entraîner un réseau neuronal pour un procédé selon une des revendications précédentes, **caractérisé en ce que** des images en profondeur types (27, 28, 29, 30) correspondant chacune à une granularité type d'un volume connu sont d'abord enregistrées et mémorisées avec le volume, après quoi plusieurs images en profondeur types (27, 28, 29, 30) sont assemblées de façon aléatoire en une image en profondeur d'entraînement (26) à laquelle la somme des volumes des images en profondeur types (27, 28, 29, 30) est associée en guide de volume de matériau en vrac, après quoi l'image en profondeur d'entraînement (26) est transmise du côté entrée et le volume de matériau en vrac associé du côté sortie du réseau neuronal et les poids des divers noeuds de réseau adaptés dans une étape d'apprentissage.

6. Procédé selon la revendication 5, **caractérisé en ce que** des images en profondeur types (27, 28, 29, 30) sont assemblées avec une orientation aléatoire en une image en profondeur d'apprentissage (26).

7. Procédé selon la revendication 5 ou 6, **caractérisé en ce que** des images en profondeur types (27, 28, 29, 30) sont assemblées avec des chevauchements partiels en une image en profondeur d'apprentissage (26), la valeur de profondeur de l'image en profondeur d'apprentissage (26) dans la zone de chevauchement correspondant à la profondeur la plus faible des deux images en profondeur types (27, 28, 29, 30).
